# EUROPEAN PATENT SPECIFICATION

(11) **EP 4 389 839 B1**
(45) Date of publication and mention of the grant of the patent: **26.08.2026**
(21) Application number: 22858161.7
(22) Date of filing: 20.06.2022
(51) Int. Cl.: C09D 201/00, C09C 3/10, C09D 5/02, C09D 7/62, A01N 59/16, A01P 3/00

(54) **USE OF AN ANTIFUNGAL EMULSION COATING OR FINE PARTICLE DISPERSION**
VERWENDUNG EINER ANTIFUNGALEN EMULSIONSBESCHICHTUNG ODER FEINPARTIKELDISPERSION
UTILISATION D'UN REVÊTEMENT ANTIFONGIQUE EN ÉMULSION OU EN DISPERSION

(30) Priority: 20.08.2021 JP 2021134743
(43) Date of publication of application: 26.06.2024
(73) Proprietor: SUMITOMO METAL MINING CO., LTD., Tokyo 105-8716 (JP)
(72) Inventor: NOSHITA, Akinari, Isa-shi, Kagoshima 895-2501 (JP); SAKO, Mika, Isa-shi, Kagoshima 895-2501 (JP); CHONAN, Takeshi, Isa-shi, Kagoshima 895-2501 (JP)
(74) Representative: TBK
(86) International application number: PCT/JP2022/024473
(87) International publication number: WO 2023/021837

(56) References cited:
- WO-A1-2015/049267
- CN-A- 113 277 563
- JP-A- 2020 172 407
- JP-B2- 6 769 562
- KIM YOUNG KWANG, KANG EUN BI, KIM SUNG MIN, PARK CHAN PIL, IN INSIK, PARK SUNG YOUNG: "Performance of NIR-Mediated Antibacterial Continuous Flow Microreactors Prepared by Mussel-Inspired Immobilization of Cs 0.33 WO 3 Photothermal Agents", APPLIED MATERIALS & INTERFACES, AMERICAN CHEMICAL SOCIETY, US, vol. 9, no. 3, 25 January 2017 (2017-01-25), US , pages 3192 - 3200, XP093037079, ISSN: 1944-8244, DOI: 10.1021/acsami.6b16634

## Description

### TECHNICAL FIELD

The present invention relates to the use of an emulsion coating material containing composite tungsten oxide fine particles having photo-thermal conversion characteristics and a resin emulsion, as an antimold emulsion coating material, and more particularly to the use of the emulsion coating material as an antimold emulsion coating material and the use of a fine particle dispersion as an antimold fine particle dispersion, which exhibit excellent antimold effect over an extended period even when a coating film formed by using this coating material is exposed to a wet heat environment, as well as use of the antimold fine particle dispersion to attain an article.

### BACKGROUND ART

Microorganisms such as mold tend to generate in warm and humid environments and propagate on building wall surfaces. This not only impairs the aesthetics of buildings but also poses environmental hygiene issues.

In view of this situation, antimold emulsion coating materials containing added organic or inorganic antimold agents have been proposed.

For example, Patent Document 1 proposes a coating material which improves durability by suppressing degradation of organic antibacterial agents, specifically by dissolving silicon dioxide, a silane coupling agent, and two organic antibacterial agents, 2-(4-thiazolyl)benzimidazole and 2,3,5,6-tetrachloro-4-(methylsulfonyl)pyridine, along with methyl methoxysiloxane in isopropyl alcohol.

Patent Document 2 also proposes a transparent inorganic antibacterial/antimold emulsion coating material in which powder obtained by pulverizing a glass block, prepared by heating and melting an inorganic component selected from either a mixture or compound of a silver salt and a phosphate salt, or a silver salt, a phosphate salt, and a calcium salt, or a silver salt, a phosphate salt, a calcium salt, and a fluoride, together with a silicate glass component, is mixed and dispersed into a transparent coating material component.

However, the coating material according to Patent Document 1 using the organic antibacterial agents such as 2-(4-thiazolyl)benzimidazole and the transparent antibacterial/antimold emulsion coating material according to Patent Document 2 using the inorganic components have poor durability when exposed to a wet heat environment, leaving room for improvement.

JP 2020 172407 A relates to a fine particle dispersing liquid comprising a liquid medium, absorbing fine particles dispersed in the medium, and a metal deactivator, in which the absorbing fine particles are one or more oxide fine particles selected from tungsten oxide fine particles represented by general formula WxOy and composite tungsten oxide fine particles represented by general formula MxWxOy, and the metal deactivator is a metal deactivator having a predetermined structure.

CN 113 277 563 A relates to molybdenum-doped cesium tungsten bronze/montmorillonite composite powder with a photothermal effect as well as a preparation method and application of the molybdenum-doped cesium tungsten bronze/montmorillonite composite powder.

WO 2015/049267 Arelates to a modified surface capable of having bacteriostatic and bactericidal activity when it is light irradiated, thus converting the surface of the substrate into a bacteriostatic and a bactericidal surface as many times as it is desired, and for a long time, wherein the modified surface upon light irradiation avoids the attachment of a microorganism to this surface, inhibits the formation of a biofilm on this surface and destroys an already formed biofilm on this surface.

Kim, Young Kwang & Kang, Eun Bi & Kim, Sung-Min & Park, Chan & In, Insik & Park, Sung. (2017, ACS applied materials & interfaces. 9. 10.1021/acsami.6b16634) relates to the performance of NIR-mediated antibacterial continuous flow microreactors prepared by mussel-inspired immobilization of Cs_{0.33}WO₃ photothermal agents.

### PRIOR ART DOCUMENTS

### PATENT DOCUMENTS

Patent Document 1: Japanese Patent Application Publication No. 2002-235017
Patent Document 2: Japanese Patent Application Publication No. Hei 7-62272
Patent Document 3: Japanese Patent No. 6769562

### SUMMARY OF THE INVENTION

### PROBLEM TO BE SOLVED BY THE INVENTION

The present invention focuses on the problems with the coating materials according to Patent Documents 1 and 2, which have poor durability, and aims to provide use of an emulsion coating material as an antimold emulsion coating material, and use of a fine particle dispersion as antimold fine particle dispersion, and use of the antimold fine particle dispersion to attain an article, which exhibit excellent antimold effect even when exposed to a wet heat environment.

### MEANS FOR SOLVING PROBLEM

To solve the above problems, the present inventors investigated antimold materials to replace the antibacterial/antimold agents with poor durability according to Patent Documents 1 and 2, and as a result discovered composite tungsten oxide fine particles having photo-thermal conversion characteristics (generating heat upon absorbing infrared rays). Through continued research on configurations for improving the wet heat resistance and chemical stability of the composite tungsten oxide fine particles, the present inventors have conceived that it is important to coat the surface of individual composite tungsten oxide fine particles using a compound which has excellent affinity to the surface of the composite tungsten oxide fine particles and uniformly adheres to the surface of individual composite tungsten oxide fine particles to form a strong coating film.

Furthermore, through continued research, the present inventors discovered metal chelate compounds and metal cyclic oligomer compounds as compounds which have excellent affinity to the composite tungsten oxide fine particles and uniformly adhere to the surface of individual composite tungsten oxide fine particles to form a strong coating film. The present inventors also found through further research that hydrolysis products of these metal chelate compounds and metal cyclic oligomer compounds generated upon hydrolysis, or polymers of the hydrolysis products, are compounds which uniformly adhere to the surface of individual composite tungsten oxide fine particles to form a strong coating film.

That is, the present inventors have conceived a configuration of composite tungsten oxide fine particles whose surfaces are coated with a coating film containing at least one selected from hydrolysis products of metal chelate compounds, polymers of hydrolysis products of metal chelate compounds, hydrolysis products of metal cyclic oligomer compounds, and polymers of hydrolysis products of metal cyclic oligomer compounds (hereinafter may be referred to as "surface-treated composite tungsten oxide fine particles"). Also, the present inventors have acquired the following knowledge. These surface-treated composite tungsten oxide fine particles maintain excellent photo-thermal conversion characteristics even when exposed to a wet heat environment, and further, preparing an antimold emulsion coating material from these surface-treated composite tungsten oxide fine particles and a resin emulsion provides a coating film formed by coating the antimold emulsion coating material on a base material, which maintains excellent photo-thermal conversion characteristics (that is, maintains antimold effect over an extended period) even when exposed to a wet heat environment.

Note that while the present applicants already have a patent on surface-treated infrared absorbing fine particles such as tungsten oxide in which surfaces are coated with a coating film containing at least one selected from hydrolysis products of metal chelate compounds, polymers of hydrolysis products of metal chelate compounds, hydrolysis products of metal cyclic oligomer compounds, and polymers of hydrolysis products of metal cyclic oligomer compounds (see Patent Document 3), the present invention has been realized through the discovery of a novel application for the patented surface-treated infrared absorbing fine particles (as an antimold emulsion coating material), and its completion was based on this discovery.

That is, the first invention according to the present invention is the use of an emulsion coating material containing composite tungsten oxide fine particles whose surfaces are coated with a coating film containing at least one selected from hydrolysis products of metal chelate compounds, polymers of hydrolysis products of metal chelate compounds, hydrolysis products of metal cyclic oligomer compounds, and polymers of hydrolysis products of metal cyclic oligomer compounds, and a resin emulsion containing a binder resin and water, wherein the emulsion coating material contains the surface-treated composite tungsten oxide fine particles dispersed therein, as an antimold emulsion coating material.

The second invention according to the present invention is the use according to the first invention, wherein a thickness of the coating film is 0.5 nm or more.

The third invention is the use according to the first invention or the second invention, wherein the metal chelate compound or the metal cyclic oligomer compound contains at least one metal element selected from Al, Zr, Ti, Si, and Zn.

The fourth invention is the use according to any one of the first to third inventions, wherein the metal chelate compound or the metal cyclic oligomer compound has at least one selected from an ether bond, an ester bond, an alkoxy group, and an acetyl group.

Next, the fifth invention according to the present invention is the use according to any one of the first to fourth inventions, wherein the composite tungsten oxide fine particles are represented by a general formula MxWyOz (where M is at least one element selected from H, He, alkali metals, alkaline earth metals, rare earth elements, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi, I, and Yb; W is tungsten; O is oxygen; 0.001≤x/y≤1; and 2.0≤z/y<4.0).

The sixth invention is the use according to the fifth invention, wherein M of the composite tungsten oxide fine particles represented by the general formula MxWyOz is at least one element selected from Cs, K, Rb, Tl, In, and Ba.

The seventh invention is the use according to the fifth or sixth invention, wherein x/y of the composite tungsten oxide fine particles represented by the general formula MxWyOz is 0.25≤x/y≤0.35.

The eighth invention is the use according to any one of the first to seventh inventions, wherein the composite tungsten oxide fine particles have a hexagonal crystal structure.

The ninth invention is the use according to any one of the first to eighth inventions, wherein the composite tungsten oxide fine particles have an average particle diameter of 10 nm to 200 nm.

In addition, the tenth invention according to the present invention is the use of a fine particle dispersion, containing composite tungsten oxide fine particles whose surfaces are coated with a coating film containing at least one selected from hydrolysis products of metal chelate compounds, polymers of hydrolysis products of metal chelate compounds, hydrolysis products of metal cyclic oligomer compounds, and polymers of hydrolysis products of metal cyclic oligomer compounds, and a solid resin in which the composite tungsten oxide fine particles are dispersed as an antimold fine particle dispersion, said dispersion being formed by coating the emulsion coating material according to the first invention.

The eleventh invention is the use according to the tenth invention, wherein the composite tungsten oxide fine particles are represented by a general formula MxWyOz (where M is at least one element selected from H, He, alkali metals, alkaline earth metals, rare earth elements, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi, I, and Yb; W is tungsten; O is oxygen; 0.001≤x/y≤1; and 2.0≤z/y<4.0).

The twelfth invention is the use according to the eleventh invention, wherein M of the composite tungsten oxide fine particles represented by the general formula MxWyOz is at least one element selected from Cs, K, Rb, Tl, In, and Ba.

The thirteenth invention is the use according to the eleventh or twelfth invention, wherein x/y of the composite tungsten oxide fine particles represented by the general formula MxWyOz is 0.25≤x/y≤0.35.

The fourteenth invention is the use according to any one of the tenth to thirteenth inventions, wherein the composite tungsten oxide fine particles have a hexagonal crystal structure.

The fifteenth invention is the use according to any one of the tenth to fourteenth inventions, wherein the composite tungsten oxide fine particles have an average particle diameter of 10 nm to 200 nm.

Furthermore, the sixteenth invention according to the present invention is the use according to any one of the tenth to fifteenth inventions, wherein the fine particle dispersion is used to form an article with the antimold fine particle dispersion being formed on a substrate selected from glass, plastic, and metal.

### EFFECTS OF THE INVENTION

The antimold emulsion coating material used according to the present invention (hereinafter also referred to as antimold emulsion coating material according to the present invention) contains composite tungsten oxide fine particles whose surfaces are coated with a coating film containing at least one selected from hydrolysis products of metal chelate compounds, polymers of hydrolysis products of metal chelate compounds, hydrolysis products of metal cyclic oligomer compounds, and polymers of hydrolysis products of metal cyclic oligomer compounds (surface-treated composite tungsten oxide fine particles), and a resin emulsion containing a binder resin and water, wherein the emulsion coating material contains the surface-treated composite tungsten oxide fine particles dispersed therein, wherein the surface-treated composite tungsten oxide fine particles maintain excellent photo-thermal conversion characteristics even when exposed to a wet heat environment.

Therefore, the coating film formed by coating the antimold emulsion coating material to be used according to the present invention on a base material maintains excellent photo-thermal conversion characteristics (antimold effect) even when exposed to a wet heat environment. This ensures that the antimold effect of the antimold emulsion coating material is sustained over an extended period.

### BRIEF DESCRIPTION OF DRAWINGS

FIG. 1 is a plan view schematically showing the crystal structure of a composite tungsten oxide having a hexagonal crystal structure.
FIG. 2 is a 300,000x transmission electron micrograph of surface-treated composite tungsten oxide fine particles according to Example 1.
FIG. 3 is an explanatory diagram showing the configuration of a high-frequency plasma reactor used in Example 5.

### BEST MODES FOR PRACTICING THE INVENTION

Embodiments of the present invention will be described below in detail.

First, the antimold emulsion coating material to be used according to the present invention containing surface-treated composite tungsten oxide fine particles will be described in the following order:
[1] Composite tungsten oxide fine particles,
[2] Surface treatment agent for composite tungsten oxide fine particles,
[3] Method for surface-coating composite tungsten oxide fine particles,
[4] Antimold emulsion coating material, antimold fine particle dispersion, and article with antimold fine particle dispersion.

Note that in the present specification, the "coating film containing at least one selected from hydrolysis products of metal chelate compounds, polymers of hydrolysis products of metal chelate compounds, hydrolysis products of metal cyclic oligomer compounds, and polymers of hydrolysis products of metal cyclic oligomer compounds," with which the surfaces of the composite tungsten oxide fine particles are coated, may be simply referred to as the "coating film."

### [1] Composite Tungsten Oxide Fine Particles

The composite tungsten oxide fine particles whose surfaces are coated with the "coating film" are represented by the general formula MxWyOz (where M is at least one element selected from H, He, alkali metals, alkaline earth metals, rare earth elements, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi, I, and Yb; W is tungsten; O is oxygen; 0.001≤x/y≤1; and 2.0≤z/y<4.0).

In general, materials containing free electrons are known to exhibit absorption reflection responses around electromagnetic waves in the wavelength region of 200 nm to 2600 nm due to plasma oscillations.

When such materials are made into fine particles of 800 nm or less, the particles may markedly absorb light in this region due to the electron state on the fine particle surface and convert the light into heat. The composite tungsten oxide fine particles generate heat by absorbing light and converting it into heat, thereby functioning as antimold particles.

Here, solar light absorption by the composite tungsten oxide fine particles will be described by explaining solar light absorption by tungsten oxide fine particles (WO₃).

In general, since tungsten oxide (WO₃) contains no effective free electrons, it exhibits little absorption reflection characteristics in the infrared region and is not effective as infrared absorbing fine particles. However, it is known that by adopting a configuration of oxygen-deficient WO₃ or a composite tungsten oxide in which a positive element such as Na is added to WO₃, free electrons are generated in the tungsten oxide or composite tungsten oxide, exhibiting absorption characteristics derived from free electrons in the infrared region. Analysis of single crystals etc. of these materials containing free electrons has suggested the response of free electrons to light in the infrared region.

Tungsten oxide fine particles and composite tungsten oxide fine particles, which are specific examples of "infrared absorbing fine particles" described in Patent Document 3, will now be described in the following order:
(1) Tungsten oxide fine particles,
(2) Composite tungsten oxide fine particles,
(3) Particle diameter of composite tungsten oxide fine particles,
(4) Production method of composite tungsten oxide fine particles.

### (1) Tungsten Oxide Fine Particles

The tungsten oxide fine particles described in Patent Document 3 are represented by the general formula WyOz (where W is tungsten, O is oxygen, and 2.2≤z/y≤2.999).

In the tungsten oxide represented by the general formula WyOz, the compositional range of the tungsten and oxygen is preferably such that the compositional ratio of oxygen to tungsten is less than 3, and more specifically, 2.2≤z/y≤2.999 when describing the infrared absorbing fine particles as WyOz. If the value of z/y is 2.2 or more, undesired WO₂ crystal phases can be prevented from appearing in the tungsten oxide, and chemical stability as the material can be achieved, providing effective infrared absorbing fine particles. On the other hand, if the value of z/y is 2.999 or less, the required amount of free electrons is generated, providing efficient infrared absorbing fine particles.

### (2) Composite Tungsten Oxide Fine Particles

The composite tungsten oxide is the above tungsten oxide (WO₃) with the addition of element M described later.

For this WO₃, By controlling the oxygen amount and adding element M that generates free electrons in combination, more efficient infrared absorbing fine particles can be obtained. By adopting this configuration, free electrons are generated in the composite tungsten oxide, exhibiting strong absorption characteristics derived from free electrons especially in the near-infrared region, making it effective as near-infrared absorbing fine particles around 1000 nm.

It is desirable that when the general formula representing these composite tungsten oxide fine particles with both controlled oxygen amount and added free electron-generating element M is described as MxWyOz (where M is the M element, W is tungsten, and O is oxygen), the relationships 0.001≤x/y≤1 and 2.0≤z/y<4.0 are satisfied.

Here, element M in the composite tungsten oxide fine particles is preferably at least one selected from H, He, alkali metals, alkaline earth metals, rare earth elements, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi, I, and Yb.

Furthermore, from the viewpoint of stability of the MxWyOz with added element M, it is more preferable that element M is at least one element selected from alkali metals, alkaline earth metals, rare earth elements, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta and Re. Also, from the viewpoint of improving optical properties and weather resistance as composite tungsten oxide fine particles, it is further preferable that element M belongs to alkaline earth metal elements, transition metal elements, Group 4B elements or Group 5B elements.

Regarding the value of x/y showing the addition amount of element M, if x/y is greater than 0.001, a sufficient amount of free electrons is generated in the composite tungsten oxide and the desired infrared absorption effect can be obtained. As the amount of added element M increases, the supply amount of free electrons increases and infrared absorption efficiency also increases, but this effect saturates around when x/y is 1. Also, it is preferable that x/y is less than 1 so that impurity phases can be prevented from being generated in the composite tungsten oxide fine particles.

Regarding the value of z/y showing the controlled oxygen amount, the same mechanism as the tungsten oxide represented by WyOz acts in the composite tungsten oxide represented by MxWyOz, and the supply of free electrons by the addition amount of element M as described above is also provided at z/y=3.0 and 2.0≤z/y≤2.2. Thus, 2.0≤z/y<4.0 is preferable, more preferably 2.2≤z/y<3.7, and further preferably 2.45≤z/y≤3.5.

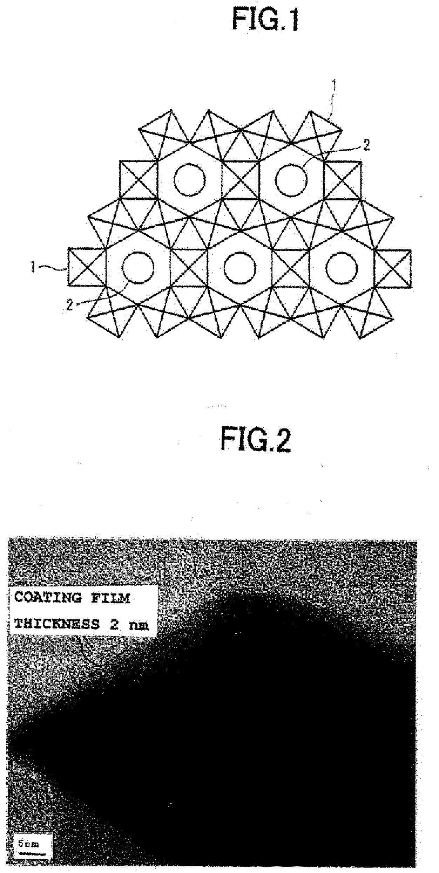

Furthermore, when the composite tungsten oxide fine particles have a hexagonal crystal structure, the visible light permeability improves and absorption in the infrared region increases. This will be explained with reference to FIG. 1, which is a plan view schematically showing the hexagonal crystal structure of a hexagonal crystal.

In FIG. 1, six octahedrons formed by WO₆ units indicated by reference numeral 1 are aggregated to constitute hexagonal voids, and element M indicated by reference numeral 2 is arranged in the voids to form one unit. A hexagonal crystal structure is configured by aggregating a large number of such units.

In order to obtain the effect of improving visible light permeability and enhancing light absorption in the infrared region, the composite tungsten oxide fine particles only need to contain the unit structure explained using FIG. 1, regardless of whether the composite tungsten oxide fine particles are crystalline or amorphous.

When cations of element M exist in the hexagonal voids in this way, visible light permeability increases and absorption in the infrared region increases. Generally, the hexagonal crystal tends to be formed when an element M having a large ionic radius is added. Specifically, the hexagonal crystal tends to be formed when at least one element selected from Cs, K, Rb, Tl, In, Ba, Li, Ca, Sr, Fe and Sn are added, more preferably when at least one element selected from Cs, K, Rb, Tl, In, and Ba are added.

Typical examples that can be preferably cited include Cs_{0.33}WOz, Cs_{0.03}Rb_{0.30}WOz, Rb_{0.33}WOz, K_{0.33}WOz and Ba_{0.33}WOz (2.0≤z≤3.0). Of course, elements M are not limited to the above elements as long as they exist in the hexagonal voids formed by WO₆ units.

When the composite tungsten oxide fine particles having a hexagonal crystal structure have a uniform crystal structure, the addition amount of the added element M is preferably 0.2 or more and 0.5 or less in terms of the x/y value, more preferably 0.20 or more and 0.37 or less, and further preferably 0.25 or more and 0.35 or less. Theoretically, setting the x/y value to 0.33 allows element M to be arranged in all of the hexagonal voids. An x/y value close to 0.33 as described above allows a hexagonal crystal structure to be obtained.

Composite tungsten oxides other than hexagonal crystals, such as tetragonal and cubic crystals, are also effective as infrared absorbing fine particles. Absorption positions in the infrared region tend to vary depending on the crystal structure, with absorption positions tending to shift to longer wavelengths in the order cubic crystal < tetragonal crystal < hexagonal crystal. Visible light absorption also tends to decrease in the order of hexagonal, tetragonal and cubic crystals. However, antimold emulsion coating materials are sometimes required to be transparent to visible light because coloring of the coated surface may be undesirable. Therefore, from the viewpoint of permeating more visible light and absorbing more light in the infrared region, it is preferable that the antimold emulsion coating material to be used according to the present invention uses hexagonal composite tungsten oxide fine particles.

### (3) Particle diameter of composite tungsten oxide fine particles

Since the composite tungsten oxide fine particles markedly absorb light around a wavelength of 1000 nm in the near-infrared region, their permeate colors are mostly bluish to greenish.

The particle diameter of the composite tungsten oxide fine particles applied in the present invention is preferably 1 nm to 800 nm, more preferably 200 nm or less. From the viewpoint of exhibiting more excellent infrared absorption characteristics, the particle diameter of the composite tungsten oxide fine particles is preferably 10 nm to 100 nm, more preferably 10 nm to 80 nm, and most preferably 10 nm to 60 nm. It has been found that infrared absorption characteristics are exhibited most excellently when the particle diameter is in the range of 10 nm to 60 nm.

Here, the particle diameter refers to the average value of each individual composite tungsten oxide fine particle, which is the average particle diameter of composite tungsten oxide fine particles contained in the antimold emulsion coating material, antimold fine particle dispersion, and article with antimold fine particle dispersion described later. Note that the particle diameter is calculated from electron microscope images of the composite tungsten oxide fine particles. On the other hand, the dispersion particle diameter of the composite tungsten oxide fine particles described below can be selected according to their purpose of use. The dispersion particle diameter is a concept including aggregated particle diameters, unlike the above-mentioned particle diameter.

In the antimold emulsion coating material, antimold fine particle dispersion, and article with antimold fine particle dispersion, the dispersed composite tungsten oxide fine particles that perform photo-thermal conversion allow homogeneous photo-thermal conversion to take place, exhibiting antimold effects.

It is preferable that the composite tungsten oxide fine particles have a dispersion particle diameter of 800 nm or less. Such a dispersion particle diameter, by which the composite tungsten oxide fine particles are dispersed, allows homogeneous photo-thermal conversion to take place, exhibiting antimold effects.

Considering more homogeneous dispersion of the composite tungsten oxide fine particles, the dispersion particle diameter is preferably 200 nm or less, more preferably 100 nm or less. This is because the smaller the dispersion particle diameter, the more homogeneously the particles disperse.

Note that the dispersion particle diameter of the composite tungsten oxide fine particles can be measured using equipment based on dynamic light scattering, such as ELS-8000 manufactured by Otsuka Electronics Co., Ltd.

Also, from the viewpoint of exhibiting excellent photo-thermal conversion leading to antimold properties, it is preferable that the crystallite diameter of the composite tungsten oxide fine particles is 1 nm to 200 nm, more preferably 1 nm to 100 nm, and further preferably 10 nm to 60 nm. The crystallite diameter can be measured by powder X-ray diffraction (θ-2θ method) to measure the X-ray diffraction pattern and analyze it by the Rietveld method. For example, the X-ray diffraction pattern can be measured using a powder X-ray diffractometer "X'Pert-PRO/MPD" manufactured by PANalytical, Spectris Co., Ltd.

### (4) Production Method of Composite Tungsten Oxide Fine Particles

An exemplary configuration of a production method for composite tungsten oxide fine particles will be described. According to the production method for composite tungsten oxide fine particles according to this embodiment, it is possible to produce composite tungsten oxide fine particles effective as the aforementioned near-infrared absorbing fine particles. Therefore, explanations for matters already described will be omitted in part.

For example, the composite tungsten oxide fine particles represented by the general formula MxWyOz according to this embodiment can be produced by a solid phase reaction method or a plasma method described below.

Each method will be described below.

### (a) Solid Phase Reaction Method

When producing composite tungsten oxide fine particles by a solid phase reaction method, the following steps can be performed:

Mixing a tungsten compound and an M element compound to prepare a raw material mixture (mixing step).

Note that in the raw material mixture, it is preferable to compound and mix each raw material so that the mass ratio (molar ratio) of element M to tungsten (M:W) becomes equal to the ratio of x to y in the general formula representing the objective composite tungsten oxide fine particles.

Next, the raw material mixture obtained in the mixing step is heat-treated in an atmosphere containing oxygen (first heat treatment step).

Then, the heat-treated product obtained after the first heat treatment step is heat-treated in a reducing gas atmosphere, a mixed gas atmosphere of a reducing gas and an inert gas, or an inert gas atmosphere (second heat treatment step).

After the second heat treatment step, the composite tungsten oxide fine particles may be subjected to grinding treatment etc. as needed to achieve a desired particle diameter.

The composite tungsten oxide fine particles obtained through the above steps have the aforementioned photo-thermal conversion characteristics (generating heat upon absorbing infrared rays) and can also serve as near-infrared absorbing material particles having excellent weather resistance.

Each step will be described in detail below.

### (Mixing Step)

As the tungsten compound used in the mixing step, at least one selected from tungstic acid (H₂WO₄), ammonium tungstate, tungsten hexachloride, and hydrates of tungsten obtained by adding water to tungsten hexachloride dissolved in alcohol, hydrolyzing it, and evaporating the solvent can be used.

As the M element compound used in the mixing step, at least one selected from oxides, hydroxides, nitrates, sulfates, chlorides, and carbonates of element M can be used.

In mixing the tungsten compound and the M element compound in the mixing step, it is preferable to compound the raw materials so that the mass ratio (M:W) of element M (M) to tungsten (W) in the obtained raw material mixture becomes equal to x:y of the general formula MxWyOz representing the objective composite tungsten oxide fine particles, and mix them.

The mixing method is not particularly limited, and either wet mixing or dry mixing may be used. In the case of wet mixing, a mixed powder of the M element compound and the tungsten compound is obtained by drying the mixture obtained after wet mixing. The drying temperature and time after wet mixing are not particularly limited.

Dry mixing can be carried out using a known mixing device such as a commercially available crusher, kneader, ball mill, sand mill, or paint shaker. Mixing conditions such as mixing time and mixing speed are not particularly limited.

### (First Heat Treatment Step)

The heat treatment temperature in the first heat treatment step is not particularly limited, but it is preferable to be higher than the temperature at which the composite tungsten oxide fine particles are crystallized. Specifically, for example, preferably 500°C to 1000°C, more preferably 500°C to 800°C.

### (Second Heat Treatment Step)

As described above, in the second heat treatment step, heat treatment can be carried out at a temperature of 500°C to 1200°C in a reducing gas atmosphere, a mixed gas atmosphere of a reducing gas and an inert gas, or an inert gas atmosphere.

When using a reducing gas in the second heat treatment step, the type of reducing gas is not particularly limited, but hydrogen (H₂) is preferable. Also, when using hydrogen as the reducing gas, its concentration may be appropriately selected depending on the firing temperature, the amount of starting materials, etc., and is not particularly limited. For example, it is preferably 20 vol% or less, more preferably 10 vol% or less, and further preferably 7 vol% or less. This is because if the concentration of the reducing gas is 20 vol% or less, generation of WO₂ having no near-infrared absorption capability due to rapid reduction can be avoided.

### (b) Plasma Method

The composite tungsten oxide fine particles represented by the general formula MxWyOz according to this embodiment can also be produced by a plasma method, for example. When producing composite tungsten oxide fine particles by the plasma method, the following steps can be performed:

Preparing a raw material mixture of a tungsten compound and an M element compound or a composite tungsten oxide precursor represented by the general formula MxWyOz' as a starting material (raw material preparation step).

Supplying the starting material prepared in the raw material preparation step into plasma together with a carrier gas to generate objective composite tungsten oxide fine particles through evaporation and condensation processes (reaction step).

### (Raw Material Preparation Step)

When preparing a raw material mixture of a tungsten compound and an M element compound as the starting material, it is preferable to compound and mix the raw materials so that the mass ratio (M:W) of element M (M) to tungsten (W) in the raw material mixture becomes equal to the ratio x:y of x to y in the aforementioned general formula representing the objective composite tungsten oxide.

As the tungsten compound and M element compound, the same materials as explained for the solid phase reaction method can be suitably used, and thus explanation thereof is omitted here.

In the composite tungsten oxide precursor represented by the general formula MxWyOz', M is as defined above, W is tungsten, and O is oxygen. It is preferable that x, y and z' satisfy 0.001≤x/y≤1 and 2.0<z'/y.

For example, the composite tungsten oxide precursor represented by the general formula MxWyOz' can be synthesized by the above solid phase reaction method. In such a composite tungsten oxide precursor, it is preferable that x/y matches x/y of the composite tungsten oxide fine particles represented by the general formula MxWyOz, which is the objective material.

### (Reaction Step)

As the carrier gas for transporting the starting material in the reaction step, a mixed gas of an inert gas and an oxygen gas can be used.

Plasma can be generated, for example, in an atmosphere of only an inert gas or a mixed gas atmosphere of an inert gas and a hydrogen gas. The plasma is not particularly limited, but thermal plasma is preferable. The raw material supplied into the plasma instantly evaporates, the evaporated raw material condenses in the process of reaching the plasma flame portion, and is quenched and solidified outside the plasma flame to generate particles of the composite tungsten oxide. According to the plasma method, for example, composite tungsten oxide fine particles having a single crystal phase can be produced.

The plasma used in the production method for the composite tungsten oxide fine particles according to this embodiment is preferably a direct current arc plasma, high-frequency plasma, microwave plasma, low-frequency alternating current plasma, a superposition thereof, plasma generated by an electrical method of applying a magnetic field to direct current plasma, plasma generated by a high-power laser, or plasma obtained by a high-power electron beam or ion beam. In any case where thermal plasma is used, it is thermal plasma having a high temperature portion of 10000 K or higher, more desirably 10000 K to 25000 K, and in particular, plasma whose particle generation time can be controlled is preferable.

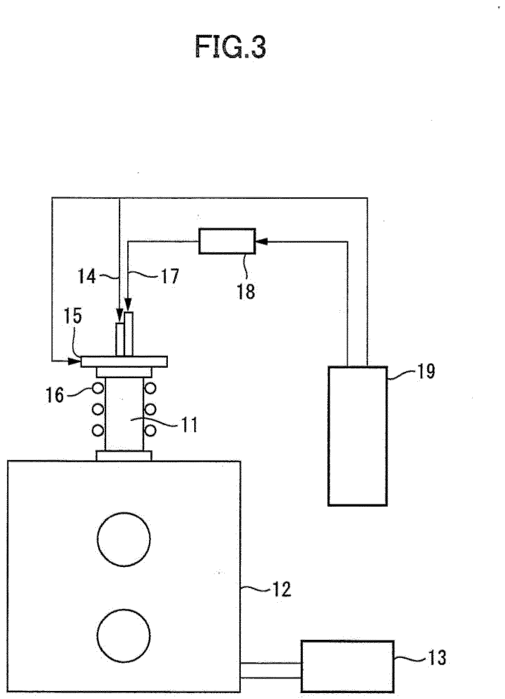

An exemplary specific configuration of the reaction step in the production method for the composite tungsten oxide fine particles according to this embodiment using the plasma method will be described with reference to FIG. 3.

The apparatus shown in FIG. 3 is a high-frequency plasma device.

The high-frequency plasma reactor has a water-cooled quartz double tube 11 and a reaction vessel 12 connected to the water-cooled quartz double tube 11. The reaction vessel 12 is also connected to a vacuum exhaust device 13.

A plasma generation gas supply port 14 is provided above the water-cooled quartz double tube 11.

The inner wall of the water-cooled quartz double tube 11 is configured to allow supply of a sheath gas for generating high-frequency plasma and protecting the quartz tube, with a sheath gas inlet 15 provided at the flange above the water-cooled quartz double tube 11.

A water-cooled copper coil 16 for generating high-frequency plasma is disposed around the water-cooled quartz double tube 11.

Near the plasma generation gas supply port 14, a raw material powder carrier gas supply port 17 is provided, which is connected to a raw material powder supply device 18 by piping.

The plasma generation gas supply port 14, the sheath gas inlet 15, and the raw material powder supply device 18 are connected to a gas supply device 19 by piping so that a predetermined gas can be supplied from the gas supply device 19 to each member. If necessary, supply ports other than the above members may be provided to be connected to the gas supply device 19 so that members in the apparatus can be cooled or have a predetermined atmosphere.

An exemplary configuration of a method for producing composite tungsten oxide fine particles using the above plasma reactor will be described.

First, the reaction system constituted by the inside of the water-cooled quartz double tube 11 and the inside of the reaction vessel 12 is evacuated by the vacuum exhaust device 13. The degree of vacuum is not particularly limited, but can be evacuated to about 0.1 Pa (about 0.001 Torr), for example. After evacuating the reaction system, argon gas can be supplied from the gas supply device 12 to fill the reaction system with argon gas. For example, it is preferable to make the reaction system an argon gas distribution system at 1 atm.

Then, plasma gas can be supplied into the reaction vessel 12. The plasma gas is not particularly limited, but any of argon gas, a mixed gas of argon and helium (Ar-He mixed gas), a mixed gas of argon and nitrogen (Ar-N₂ mixed gas), neon, helium and xenon can be used.

The supply flow rate of the plasma gas is not particularly limited, but can be introduced from the plasma generation gas supply port 14 at a flow rate of preferably 20 L/min or more and 50 L/min or less, more preferably 25 L/min or more and 35 L/min or less, for example. High-frequency plasma can then be generated.

On the other hand, outside the plasma region, a sheath gas can be supplied in a swirling manner from the sheath gas inlet 15 along the inner wall of the water-cooled quartz double tube 11. The type and supply rate of the sheath gas are not particularly limited, but for example, 20 L/min or more and 50 L/min or less of argon gas and 1 L/min or more and 5 L/min or less of hydrogen gas can be passed to generate high-frequency plasma.

Then, high-frequency power can be applied to the water-cooled copper coil 16 for generating high-frequency plasma. The conditions of the high-frequency power source are not particularly limited, but high-frequency power of 15 kW or more and 50 kW or less can be applied, for example.

After generating such high-frequency plasma, the raw material can be introduced from the raw material powder carrier gas supply port 17 by the raw material powder supply device 18 using carrier gas. The carrier gas is not particularly limited, but a mixed gas of 1 L/min or more and 8 L/min or less of argon gas and 0.001 L/min or more and 0.8 L/min or less of oxygen gas can be used.

The reaction is carried out by introducing into the plasma the raw material mixture or composite tungsten oxide precursor serving as the starting material supplied into the plasma. The supply rate of the starting material from the raw material powder carrier gas supply port 17 is not particularly limited. It is preferable to supply at a rate of 1 g/min or more and 50 g/min or less, more preferably 1 g/min or more and 20 g/min or less.

By setting the supply rate of the starting material to 50 g/min or less, the ratio of the starting material passing through the center of the plasma flame can be sufficiently increased and the ratio of unreacted materials and intermediate products can be suppressed to increase the ratio of generating desired composite tungsten oxide fine particles. Also, setting the supply rate of the starting material to 1 g/min or more can improve productivity.

The starting material supplied into the plasma instantly evaporates in the plasma and composite tungsten oxide fine particles having an average primary particle diameter of 100 nm or less are generated through a condensation process.

Note that the particle diameter of the composite tungsten oxide fine particles obtained by the production method according to this embodiment can be easily controlled by the plasma output, plasma flow rate, amount of supplied raw material powder, etc.

After the reaction, since the generated composite tungsten oxide fine particles deposit in the reaction vessel 12, they can be collected.

### Surface Treatment Agent for Composite Tungsten Oxide Fine Particles

[2] The surface treatment agent used for the "coating film" coating the surface of the composite tungsten oxide fine particles is at least one selected from hydrolysis products of metal chelate compounds, polymers of hydrolysis products of metal chelate compounds, hydrolysis products of metal cyclic oligomer compounds, and polymers of hydrolysis products of metal cyclic oligomer compounds.

From the preferable viewpoint that the metal chelate compound and metal cyclic oligomer compound are metal alkoxides, metal acetylacetonates and metal carboxylates, it is preferable that they have at least one selected from an ether bond, an ester bond, an alkoxy group, and an acetyl group.

The surface treatment agent used for the "coating film" will now be described in the following order:
(1) Metal chelate compound,
(2) Metal cyclic oligomer compound,
(3) Hydrolysis products of metal chelate compounds and metal cyclic oligomer compounds, and polymers thereof,
(4) Amount of added surface treatment agent.

### (1) Metal Chelate Compound

The metal chelate compound is preferably at least one selected from Al-based, Zr-based, Ti-based, Si-based, and Zn-based chelate compounds containing alkoxy groups.

The aluminum-based chelate compound includes for example: aluminum alcoholates such as aluminum ethylate, aluminum isopropylate, aluminum sec-butylate, mono-sec-butoxyaluminum diisopropylate or these polymers, ethyl acetoacetate aluminum diisopropylate, aluminum tris (ethyl acetoacetate), octyl acetoacetate aluminum diisopropylate, stearyl acetoaluminum diisopropylate, aluminum monoacetylacetonate bis (ethylacetoacetate), aluminum tris (acetylacetonate), etc.

These compounds are aluminum chelate compounds containing alkoxy groups obtained by dissolving aluminum alcoholate in aprotic solvent, petroleum solvent, hydrocarbon solvent, ester solvent, ketone solvent, ether solvent, amide solvent, etc., and adding β-diketone, β-ketoester, monohydric or polyhydric alcohol, fatty acid, etc. to the above solution, and heating the mixture under reflux to cause a ligand displacement reaction.

The zirconia-based chelate compound includes for example: zirconium ethylate, zirconium alcoholate such as zirconium butyrate or these polymer, zirconium tributoxystearate, zirconium tetraacetylacetonate, zirconium tributoxyacetylacetonate, zirconium dibutoxybis (acetylacetonate), zirconium tributoxyethyl acetoacetate, zirconium butoxyacetylacetonate bis ( ethylacetoacetate ), etc.

The titanium-based chelate compound includes: titanium alcoholates such as methyl titanate, ethyl titanate, isopropyl titanate, butyl titanate, 2-ethylhexyl titanate and these polymers, titanium acetylacetonate, titanium tetraacetylacetonate, titanium octylene glycolate, titanium ethyl acetoacetate, titanium lactate, titanium triethanol aminate, etc.

The silicon-based chelate compound includes for example: tetrafunctional silane compounds represented by a general formula: Si(OR)₄ (where R is the same or different monovalent hydrocarbon group having 1 to 6 carbon atoms) or a hydrolysis product thereof. Specific examples of the tetrafunctional silane compounds include: tetramethoxysilane, tetraethoxysilane, tetrapropoxysilane, tetrabutoxysilane, etc. Furthermore, application is also possible for a silane monomer (or oligomer) in which part or all of the alkoxy groups of these alkoxysilane monomers are hydrolyzed to form silanol (Si-OH) groups, and polymers self-condensed through hydrolysis reaction.

Further, the hydrolysis product of a tetrafunctional silane compound (meaning the entire hydrolysis products of tetrafunctional silane compounds) includes for example: a silane monomer in which a part or all of an alkoxy group is hydrolyzed to a silanol (Si-OH) group, oligomers of 4 to 5 mer, and polymers (silicone resin) having a weight average molecular weight (Mw) of about 800 to 8000. Note that in the course of the hydrolysis reaction, not all of the alkoxysilyl groups (SiC-OR) in the alkoxysilane monomer are hydrolyzed to silanol (Si-OH).

The zinc-based chelate compound preferably includes for example: organic zinc carboxylate such as zinc octylate, zinc laurate, zinc stearate, zinc acetylacetone chelate, benzoylacetone zinc chelate, dibenzoylmethane zinc chelate, ethyl zinc acetoacetate chelate, etc.

### (2) Metal Cyclic Oligomer Compound

Examples of the metal cyclic oligomer compound include at least one selected from Al-based, Zr-based, Ti-based, Si-based, and Zn-based cyclic oligomer compounds. Among them, cyclic aluminum oxide octylate, cyclic aluminum oxide isopropylate, cyclic aluminum oxide stearate and other cyclic aluminum oligomer compounds can be preferably exemplified.

### (3) Hydrolysis Products of Metal Chelate Compounds and Metal Cyclic Oligomer Compounds, and Polymers Thereof

In the present invention, all of the alkoxy groups, ether bonds and ester bonds in the aforementioned metal chelate compounds and metal cyclic oligomer compounds are hydrolyzed to form hydrolysis products having hydroxyl groups and carboxyl groups, partially hydrolyzed partial hydrolysis products with some of them hydrolyzed, and/or polymers obtained by self-condensation through the hydrolysis reactions are used to coat the surfaces of composite tungsten oxide fine particles to form a "coating film" and obtain surface-treated composite tungsten oxide fine particles to be used according to the present invention. That is, the hydrolysis product in the present invention is a concept including partial hydrolysis products.

However, for example, in a reaction system with an intervening organic solvent such as alcohol, even if the system contains sufficient water in stoichiometric terms, not all of the alkoxy groups, ether bonds and ester bonds of the starting metal chelate compounds and metal cyclic oligomer compounds are necessarily completely hydrolyzed, depending on the type and concentration of the organic solvent. Therefore, under the conditions of the surface coating method described later, an amorphous state incorporating carbon C in the molecules of the hydrolysis products may be formed even after the hydrolysis. As a result, undecomposed metal chelate compounds and/or metal cyclic oligomer compounds may be contained in the "coating film", but trace amounts are not particularly problematic.

### (4) Amount of Added Surface Treatment Agent

The amount of the aforementioned metal chelate compounds and metal cyclic oligomer compounds added is preferably 0.05 parts by mass or more and 1000 parts by mass or less in terms of metal element relative to 100 parts by mass of the composite tungsten oxide fine particles, more preferably 5 parts by mass or more and 500 parts by mass or less, and most preferably 5 parts by mass or more and 50 parts by mass or less.

This is because if the metal chelate compound or metal cyclic oligomer compound is 0.05 parts by mass or more, the hydrolysis products of these compounds and polymers of the hydrolysis products exhibit the effect of coating the surfaces of the composite tungsten oxide fine particles, providing a wet heat resistance improving effect.

Also, if the metal chelate compound or metal cyclic oligomer compound is 1000 parts by mass or less, excessive adsorption to the composite tungsten oxide fine particles can be avoided. In addition, improvement in wet heat resistance by surface coating does not saturate, allowing improvement of the coating effect to be expected.

Furthermore, since the metal chelate compound or metal cyclic oligomer compound being 1000 parts by mass or less prevents excessive adsorption to the composite tungsten oxide fine particles, it avoids particles from granulating through hydrolysis products of the metal chelate compounds or metal cyclic oligomer compounds and polymers of the hydrolysis products during removal of the medium. Avoiding such undesirable granulation between the fine particles ensures good transparency.

In addition, excessive amounts of metal chelate compounds or metal cyclic oligomer compounds can avoid increased production costs due to increased amounts used and processing time. Therefore, from an industrial point of view as well, it is preferable that the amount of metal chelate compounds and metal cyclic oligomer compounds is 1000 parts by mass or less.

### [3] Method for Surface-Coating Composite Tungsten Oxide Fine Particles

In the method for surface-coating composite tungsten oxide fine particles, first, a coating film forming dispersion (which may be referred to as a "coating film forming dispersion" in the present specification) for forming composite tungsten oxide fine particles to be surface-coated is prepared by dispersing the composite tungsten oxide fine particles in an appropriate medium.

Then, when a surface treatment agent is added and mixed with stirring to the prepared coating film forming dispersion, the surfaces of the composite tungsten oxide fine particles become coated with a coating film containing at least one selected from hydrolysis products of metal chelate compounds, polymers of hydrolysis products of metal chelate compounds, hydrolysis products of metal cyclic oligomer compounds, and polymers of hydrolysis products of metal cyclic oligomer compounds, allowing surface-treated composite tungsten oxide fine particles according to this embodiment to be obtained. In the process where the surfaces of the composite tungsten oxide fine particles are coated, the coating film forming dispersion with the added surface treatment agent becomes a matured liquid as described later.

The method for surface-coating composite tungsten oxide fine particles will now be described in the following order:
(1) Preparation of coating film forming dispersion,
(2) Method for surface-treating (surface-coating) composite tungsten oxide fine particles using a coating film forming dispersion with water as a medium,
(3) Method for surface-coating composite tungsten oxide fine particles using a coating film forming dispersion containing water and an organic solvent,
(4) Thickness of coating film,
(5) Treatment after mixing and stirring the coating film forming dispersion.

### (1) Preparation of Coating Film Forming Dispersion

In order to coat the surfaces of composite tungsten oxide fine particles with a "coating film" and produce surface-treated composite tungsten oxide fine particles, first, the coating film forming dispersion is prepared by dispersing the composite tungsten oxide fine particles in water or a water-containing organic solvent.

On the other hand, the surface treatment agent described in the section "[2] Surface Treatment Agent for Composite Tungsten Oxide Fine Particles" is prepared.

Then, when the surface treatment agent is added with mixing and stirring to the above coating film forming dispersion, the surfaces of the composite tungsten oxide fine particles become coated with a "coating film" containing at least one selected from hydrolysis products of metal chelate compounds, polymers of hydrolysis products of metal chelate compounds, hydrolysis products of metal cyclic oligomer compounds, and polymers of hydrolysis products of metal cyclic oligomer compounds.

In preparing the coating film forming dispersion, it is preferable that the composite tungsten oxide is finely pulverized in advance and dispersed in water or a suitable organic solvent containing water to be in a monodispersed state. At this time, it is preferable that the dispersion concentration of the composite tungsten oxide is 0.01% by mass to 80% by mass. With this dispersion concentration range, the liquid stability of the dispersion is excellent. Also, by selecting suitable liquid media, dispersants, coupling agents and surfactants, gelation of the dispersion and sedimentation of particles can be prevented from occurring even when placed in a thermostat at 40°C for over 6 months, allowing the dispersion particle diameter to be maintained in the range of 1 to 200 nm.

It is important to ensure the dispersed state during the pulverizing and dispersing process and prevent aggregation between composite tungsten oxide fine particles. This is because in the next step of "surface treatment of composite tungsten oxide fine particles", the composite tungsten oxide fine particles are surface-coated while aggregated to form aggregates, and consequently such aggregates remain even when the composite tungsten oxide fine particles are dispersed to form an antimold fine particle dispersion as described later, inhibiting homogeneous photo-thermal conversion and adversely affecting antimold properties.

Specific examples of such pulverizing and dispersing process include pulverizing and dispersing methods using apparatuses such as bead mills, ball mills, sand mills, paint shakers, and ultrasonic homogenizers. Among them, it is preferable to perform pulverization and dispersion by media stirring mills such as bead mills, ball mills, sand mills, and paint shakers using media such as beads, balls, and Ottawa sand, since the time required to reach the desired dispersion particle diameter is short.

The prepared coating film forming dispersion is mixed and stirred while adding the surface treatment agent. At this time, it is desirable to dilute the coating film forming dispersion to an appropriate concentration with water or a suitable organic solvent containing water. This is because diluting to a dispersion concentration of the composite tungsten oxide fine particles of 0.01% by mass to 20% by mass, more preferably 1% by mass to 10% by mass, allows the surfaces of all the composite tungsten oxide fine particles to be uniformly coated.

### (2) Method for Surface-Treating Composite Tungsten Oxide Fine Particles Using a Coating Film Forming Dispersion with Water as a Medium

The present inventors have found that in preparing the above coating film forming dispersion, it is preferable to immediately complete the hydrolysis reaction of the metal chelate compound and metal cyclic oligomer compound added by adding the aforementioned surface treatment agent while stirring and mixing a coating film forming dispersion using water as a medium.

Note that from the viewpoint of uniformly surface-coating the composite tungsten oxide fine particles, it is preferable to add the surface treatment agent dropwise. This is considered to be due to the influence of the reaction order of the added surface treatment agent. That is, in a coating film forming dispersion using water as a medium, the hydrolysis reaction of the surface treatment agent necessarily precedes, followed by the polymerization reaction of the generated hydrolysis products. As a result, compared to cases not using water as a medium, the amount of residual carbon C in the surface treatment agent molecule existing in the coating film can be reduced. By reducing the amount of residual carbon C in the surface treatment agent molecule existing in the coating film, it is considered that a "coating film" that densely coats the surfaces of individual composite tungsten oxide fine particles could be formed.

Also, when the surface treatment agent is added dropwise, it is preferable to add the surface treatment agent diluted with a suitable solvent in order to adjust the amount added per unit time of the surface treatment agent. As the solvent used for dilution, it is preferable to use one that does not react with the surface treatment agent and has high compatibility with water as the medium of the coating film forming dispersion. Specifically, solvents such as alcohol-based, ketone-based, glycol-based solvents can be preferably used.

The dilution factor of the surface treatment agent is not particularly limited. However, from the viewpoint of ensuring productivity, the dilution factor is preferably 100-fold or less.

Note that in the coating film forming dispersion using water as a medium as described above, the metal chelate compound, metal cyclic oligomer compound, their hydrolysis products and polymers of the hydrolysis products are decomposed into metal ions immediately after addition, but the decomposition to metal ions ends when a saturated aqueous solution is reached.

On the other hand, in the coating film forming dispersion using water as a medium, the composite tungsten oxide fine particles maintain dispersion due to electrostatic repulsion. As a result, it is considered that the surfaces of all the composite tungsten oxide fine particles become coated with a "coating film" containing at least one selected from hydrolysis products of metal chelate compounds, polymers of hydrolysis products of metal chelate compounds, hydrolysis products of metal cyclic oligomer compounds, and polymers of hydrolysis products of metal cyclic oligomer compounds, producing the surface-treated composite tungsten oxide fine particles to be used according to the present invention. The coating film forming dispersion with the added surface treatment agent becomes a matured liquid, and a coating film is formed on the surface of the composite tungsten oxide fine particles.

### (3) Method for Surface-Coating Composite Tungsten Oxide Fine Particles Using a Coating Film Forming Dispersion Containing Water and an Organic Solvent

As a modified example of the preparation method for the coating film forming dispersion using water as a medium, an organic solvent containing water may be used as the medium for the coating film forming dispersion, and the above reaction sequence may be carried out while adjusting the amount of water added to an appropriate value.

This preparation method is suitable when it is desired to reduce the water content in the coating film forming dispersion due to a subsequent step.

Specifically, while stirring and mixing a coating film forming dispersion using an organic solvent as a medium, the aforementioned surface treatment agent and pure water are added dropwise in parallel. At this time, the medium temperature influencing the reaction rate and the rates of adding the surface treatment agent and pure water dropwise are appropriately controlled. The organic solvent may be any solvent that dissolves in water at room temperature, such as an alcohol-based, ketone-based or glycol-based solvent, allowing various ones to be selected.

Also in this "(3) Method for surface-coating composite tungsten oxide fine particles using a coating film forming dispersion containing water and an organic solvent", when the surface treatment agent is added dropwise, it is preferable to add the surface treatment agent diluted with a suitable solvent in order to adjust the amount added per unit time of the surface treatment agent. In this case, as the solvent used for dilution, it is preferable to use one that does not react with the surface treatment agent and has high compatibility with the water-containing organic solvent as the medium of the coating film forming dispersion. Specifically, solvents such as alcohol-based, ketone-based, glycol-based solvents can be preferably used.

Note that the correspondence when commercially available metal chelate compounds and metal cyclic oligomer compounds are used as the surface treatment agent and the dilution factor of the surface treatment agent are the same as in the case of the "(2) Method for surface-treating composite tungsten oxide fine particles using a coating film forming dispersion with water as a medium" described above.

### (4) Thickness of Coating Film

In the surface-treated composite tungsten oxide fine particles to be used according to the present invention, it is preferable that the "coating film" has a thickness of 0.5 nm or more. This is considered to be because if the "coating film" has a thickness of 0.5 nm or more, the surface-treated composite tungsten oxide fine particles exhibit sufficient wet heat resistance and chemical stability. On the other hand, from the viewpoint of ensuring predetermined optical properties of the surface-treated composite tungsten oxide fine particles, the thickness of the "coating film" is preferably 20 nm or less.

Therefore, the thickness of the "coating film" is more preferably 0.5 nm to 20 nm, and further preferably 1 nm to 10 nm.

Note that the thickness of the "coating film" can be measured from a transmission electron microscopic image of the surface-treated composite tungsten oxide fine particles. For example, in the 300,000x transmission electron microscopic image of the surface-treated composite tungsten oxide fine particles according to Example 1 shown in FIG. 2 described later, the portion where lattice fringes of the composite tungsten oxide fine particles (alignment of atoms in the crystal) sandwiched between two parallel solid lines are not observed corresponds to the "coating film".

### (5) Treatment after Mixing and Stirring Coating Film Forming Dispersion

The surface-treated composite tungsten oxide fine particles to be used according to the present invention obtained by the above surface coating method can be used in particulate form or dispersed in a liquid medium or solid medium as a raw material for the antimold emulsion coating material or antimold fine particle dispersion.

That is, the generated surface-treated composite tungsten oxide fine particles do not require operations to improve the density and chemical stability of the coating film by further heat treatment. This is because the density and adhesion of the coating film are sufficiently increased without such heat treatment since desired wet heat resistance is already obtained.

As described above, since the surface-treated composite tungsten oxide fine particles to be used according to the present invention do not require heat treatment after treatment after mixing and stirring, they do not aggregate, and thus dispersion treatment for crushing such aggregates is unnecessary. As a result, the coating film of the surface-treated composite tungsten oxide fine particles to be used according to the present invention coats individual composite tungsten oxide fine particles without damaging them. The antimold fine particle dispersion produced using these surface-treated composite tungsten oxide fine particles is considered to exhibit excellent wet heat resistance.

However, it is possible to heat treat the coating film forming dispersion and surface-treated composite tungsten oxide fine particles for purposes such as obtaining surface-treated composite tungsten oxide fine particle powder from the coating film forming dispersion and drying the obtained surface-treated composite tungsten oxide fine particle powder. However, in this case, care should be taken not to exceed the temperature at which the surface-treated composite tungsten oxide fine particles aggregate to form aggregates.

This is because transparency is required in many cases owing to applications of the antimold fine particle dispersion in which the surface-treated composite tungsten oxide fine particles to be used according to the present invention are finally used. However, when an antimold fine particle dispersion is produced using aggregates of surface-treated composite tungsten oxide fine particles, antimold effects may not be exhibited homogeneously due to localized surface-treated composite tungsten oxide fine particles.

To avoid such a situation, the aggregates need to be crushed and redispersed by a dry and/or wet method. Therefore, it is preferable to examine redispersion conditions so that the "coating film" coating the surfaces of the surface-treated composite tungsten oxide fine particles is not damaged or peeled off.

### [4] Antimold Emulsion Coating Material, Antimold Fine Particle Dispersion and Article with Antimold Fine Particle Dispersion

The antimold emulsion coating material, antimold fine particle dispersion and article with antimold fine particle dispersion using the surface-treated composite tungsten oxide fine particles to be used according to the present invention will now be described.

### (1) Antimold Emulsion Coating Material

The antimold emulsion coating material to be used according to the present invention contains composite tungsten oxide fine particles whose surfaces are coated with a coating film containing at least one selected from hydrolysis products of metal chelate compounds, polymers of hydrolysis products of metal chelate compounds, hydrolysis products of metal cyclic oligomer compounds, and polymers of hydrolysis products of metal cyclic oligomer compounds (surface-treated composite tungsten oxide fine particles), and a resin emulsion. It is preferable that the emulsion coating material contains 0.1% by mass to 50% by mass of the surface-treated composite tungsten oxide fine particles dispersed therein.

That is, the antimold emulsion coating material to be used according to the present invention contains a binder resin, water and surface-treated composite tungsten oxide fine particles, and may have added pigments and dyes for coloring.

Examples of resins applicable to the coating material include homopolymers such as acrylic acid esters, methacrylic acid esters, ethylene, vinyl acetate, vinyl versatate, styrene, vinyl chloride, vinylidene chloride, urethane, and epoxy, or copolymers of two or more kinds or blend resins thereof.

Additives such as dispersants, wetting agents, defoamers, foaming agents, emulsifiers, antistatic agents and other surfactants, filming aids, freeze stabilizers and organic solvents such as plasticizers can be added. Thickeners such as methyl cellulose, polyvinyl alcohol, hydroxymethyl cellulose, sodium polyacrylate, polyvinyl pyrrolidone and guar gum may also be added. Furthermore, lightweight aggregates such as foamed clay, pumice, perlite, foamed styrene powder, shirasu balloons and vermiculite, wollastonite, silica sand, preservatives, etc. can also be added.

Examples of the pigments include white pigments such as zinc white, lithopone and titanium oxide; coloring pigments such as carbon black, red iron oxide, iron oxide, chrome yellow, chromium oxide, phthalocyanine blue, phthalocyanine green, ultramarine and toluidine red; extender pigments such as gypsum, calcium carbonate, silica, bentonite, clay, talc, aluminum hydroxide and barite; and metal powder pigments such as copper powder, gold powder and aluminum powder.

The antimold emulsion coating material to be used according to the present invention can be produced by the same method as general aqueous coating materials. It can be produced simply by using a dispersing device such as a high-speed mill, ball mill or sand mill to add and disperse various compounding materials.

### (2) Antimold Fine Particle Dispersion and Article with Antimold Fine Particle Dispersion

The antimold emulsion coating material to be used according to the present invention is coated on a substrate selected from building exterior walls, glass, plastics, metals, etc. to form a coating film. A solvent such as water in the coating film evaporates to form a cured film serving as an antimold fine particle dispersion. The antimold fine particle dispersion formed on the substrate serves as an article with the antimold fine particle dispersion.

### Examples

The present invention will now be described below in detail based on examples and comparative examples.

First, evaluation methods for samples according to the examples and comparative examples below will be described.

### (1) Crystal Structure and Crystallite Diameter

The crystal structures of composite tungsten oxides obtained in the examples and comparative examples were measured.

The measurement was performed by measuring X-ray diffraction patterns of the composite tungsten oxide fine particles by powder X-ray diffraction (θ-2θ method) using a powder X-ray diffractometer ("X'Pert-PRO/MPD" manufactured by PANalytical, Spectris Co., Ltd.) .

Then, the crystal structure of the composite tungsten oxide constituting the fine particles was identified from the obtained X-ray diffraction pattern, and the crystallite diameter was calculated from the obtained X-ray diffraction pattern by the Rietveld method.

### (2) Observation of Surface-Treated Composite Tungsten Oxide Fine Particles by Transmission Electron Microscope

The thickness of the coating film in the surface-treated composite tungsten oxide fine particles obtained in the examples was read as the coating film from 300,000x photographic data obtained using a transmission electron microscope (HF-2200 manufactured by Hitachi, Ltd.) without the lattice fringes of the surface-treated composite tungsten oxide fine particles.

### (3) Antimold Evaluation (JIS Z 2911)

The antimold properties of antimold emulsion coating materials containing the surface-treated composite tungsten oxide fine particles obtained in the following examples and the antimold emulsion coating materials containing composite tungsten oxide fine particles obtained in the following comparative examples were evaluated.

For the evaluation, the surfaces of glass substrates coated with the antimold emulsion coating materials according to the examples and comparative examples were subjected to streak smearing with an inoculation loop with a bacterial count of 1.0×10⁵ cells/mL, and the glass substrates subjected to streak smearing were placed in desiccators maintained at 25±5°C and humidity of 80±5% and allowed to stand for 14 days in a place fully exposed to sunlight.

Then, the surfaces of the test pieces (glass substrates subjected to streak smearing) cultured for 14 days were observed. Growth of mold hardly visible to the naked eye was judged as pass (⊚). Cases where mold clearly visible to the naked eye covered 50% or less of the test piece surface were judged as pass (○). Cases where mold clearly visible to the naked eye covered more than 50% of the test piece surface were judged as fail (×).

Note that the fungal strains used were Aspergillus niger and Penicillium pinophilum.

### [Example 1]

### (1) Production of Surface-Treated Composite Tungsten Oxide Fine Particles

A dispersion liquid of Cs_{0.33}WO₃ fine particles according to Example 1 was obtained by mixing 25% by mass of cesium composite tungsten oxide powder having a Cs/W molar ratio of 0.33 (YM-01 manufactured by Sumitomo Metal Mining Co., Ltd.) and 75% by mass of pure water, charging the resulting mixture into a paint shaker containing 0.3 mmφ ZrO₂ beads, and pulverizing/dispersing for 10 hours.

Part of the dispersion liquid of Cs_{0.33}WO₃ fine particles according to Example 1 obtained was taken out, the solvent was removed from the separated dispersion liquid, and it was confirmed by X-ray diffraction that the product was hexagonal Cs_{0.3}WO₃. The crystallite diameter measured was 32 nm.

Furthermore, the remaining dispersion liquid of Cs_{0.33}WO₃ fine particles according to Example 1 obtained was mixed with pure water to obtain a coating film forming dispersion A according to Example 1 having a Cs_{0.33}WO₃ fine particle concentration of 14% by mass.

On the other hand, 38.6% by mass of S-75P (a mixed liquid of 75% by mass of aluminum ethyl acetoacetate diisopropylate and 25% by mass of isopropyl alcohol manufactured by Kawaken Fine Chemicals Co., Ltd.), which is an aluminum-based chelate compound, and 61.4% by mass of isopropyl alcohol (IPA) were mixed to prepare a surface treatment agent a1 according to Example 1.

Then, while strongly stirring the coating film forming dispersion A according to Example 1 in a 2000 g beaker with a stirrer, 968 g of the surface treatment agent a1 according to Example 1 was added dropwise.

After dropwise addition of the surface treatment agent a1, stirring was further performed at room temperature for 24 hours to produce a matured liquid according to Example 1.

Next, the medium was evaporated from the matured liquid according to Example 1 by vacuum flow drying, and the obtained dried product was dry-pulverized with a hammer mill to obtain surface-treated composite tungsten oxide fine particles according to Example 1.

Observation of the surface-treated composite tungsten oxide fine particles according to Example 1 by a transmission electron microscope showed that the average particle diameter was 25 nm and the thickness of the coating film was 2 nm.

### (2) Production of Antimold Emulsion Coating Material

Next, 5 g of the powder of surface-treated composite tungsten oxide fine particles according to Example 1 was mixed with 45 g of an acrylic resin emulsion coating material (aqueous solvent 46% by mass, acrylic resin 54% by mass), and the resulting mixture was ultrasonically dispersed for 30 minutes to obtain an antimold emulsion coating material according to

### Example 1.

### (3) Production of Antimold Fine Particle Dispersion

Next, the antimold emulsion coating material according to Example 1 obtained was coated on a 3 mm thick glass substrate using a bar coater to form a coating film.

Then, this coating film was allowed to dry naturally for 24 hours to produce an antimold fine particle dispersion according to Example 1, and the antimold properties of the obtained antimold fine particle dispersion according to Example 1 were evaluated.

The results are shown in Table 1 below.

### [Example 2]

### (1) Production of Surface-Treated Composite Tungsten Oxide Fine Particles

A surface treatment agent a2 according to Example 2 was obtained by mixing 43.75% by mass of S-75P (a mixed liquid of 75% by mass of aluminum ethyl acetoacetate diisopropylate and 25% by mass of isopropyl alcohol manufactured by Kawaken Fine Chemicals Co., Ltd.), which is an aluminum-based chelate compound, and 56.25% by mass of isopropyl alcohol (IPA).

Then, surface-treated composite tungsten oxide fine particles according to Example 2 were obtained as in Example 1 except that while strongly stirring the coating film forming dispersion A obtained in Example 1 in a 1000 g beaker with a stirrer, 512 g of the surface treatment agent a2 according to Example 2 was added dropwise over 5 hours.

Note that observation of the surface-treated composite tungsten oxide fine particles according to Example 2 by a transmission electron microscope showed that the average particle diameter was 25 nm and the thickness of the coating film was 2 nm.

### (2) Production of Antimold Emulsion Coating Material

Next, 5 g of the powder of surface-treated composite tungsten oxide fine particles according to Example 2 was mixed with 45 g of an acrylic resin emulsion coating material (aqueous solvent 46% by mass, acrylic resin 54% by mass), and the resulting mixture was ultrasonically dispersed for 30 minutes to obtain an antimold emulsion coating material according to Example 2.

### (3) Production of Antimold Fine Particle Dispersion

Next, the antimold emulsion coating material according to Example 2 obtained was coated on a 3 mm thick glass substrate using a bar coater to form a coating film.

Then, this coating film was allowed to dry naturally for 24 hours to produce an antimold fine particle dispersion according to Example 2, and the antimold properties of the obtained antimold fine particle dispersion according to Example 2 were evaluated.

The results are also shown in Table 1 below.

### [Example 3]

### (1) Production of Surface-Treated Composite Tungsten Oxide Fine Particles

A surface treatment agent a3 according to Example 3 was obtained by mixing 2.66% by mass of S-75P (a mixed liquid of 75% by mass of aluminum ethyl acetoacetate diisopropylate and 25% by mass of isopropyl alcohol manufactured by Kawaken Fine Chemicals Co., Ltd.), which is an aluminum-based chelate compound, and 97.34% by mass of isopropyl alcohol (IPA).

Then, surface-treated composite tungsten oxide fine particles according to Example 3 were obtained as in Example 1 except that while strongly stirring the coating film forming dispersion A obtained in Example 1 in a 1000 g beaker with a stirrer, 351 g of the surface treatment agent a3 according to Example 3 was added dropwise over 5 hours.

Note that observation of the surface-treated composite tungsten oxide fine particles according to Example 3 by a transmission electron microscope showed that the average particle diameter was 25 nm and the thickness of the coating film was 1 nm.

### (2) Production of Antimold Emulsion Coating Material

Next, 5 g of the powder of surface-treated composite tungsten oxide fine particles according to Example 3 was mixed with 45 g of an acrylic resin emulsion coating material (aqueous solvent 46% by mass, acrylic resin 54% by mass), and the resulting mixture was ultrasonically dispersed for 30 minutes to obtain an antimold emulsion coating material according to Example 3.

### (3) Production of Antimold Fine Particle Dispersion

Next, the antimold emulsion coating material according to Example 3 obtained was coated on a 3 mm thick glass substrate using a bar coater to form a coating film.

Then, this coating film was allowed to dry naturally for 24 hours to produce an antimold fine particle dispersion according to Example 3, and the antimold properties of the obtained antimold fine particle dispersion according to Example 3 were evaluated.

The results are also shown in Table 1 below.

### [Example 4]

### (1) Production of Surface-Treated Composite Tungsten Oxide Fine Particles

A surface treatment agent a4 according to Example 4 was obtained by mixing 50.54% by mass of S-75P (a mixed liquid of 75% by mass of aluminum ethyl acetoacetate diisopropylate and 25% by mass of isopropyl alcohol manufactured by Kawaken Fine Chemicals Co., Ltd.), which is an aluminum-based chelate compound, and 49.46% by mass of isopropyl alcohol (IPA).

Then, surface-treated composite tungsten oxide fine particles according to Example 4 were obtained as in Example 1 except that while strongly stirring the coating film forming dispersion A obtained in Example 1 in a 1000 g beaker with a stirrer, 554 g of the surface treatment agent a4 according to Example 4 was added dropwise over 5 hours.

Note that observation of the surface-treated composite tungsten oxide fine particles according to Example 4 by a transmission electron microscope showed that the average particle diameter was 25 nm and the thickness of the coating film was 2 nm.

### (2) Production of Antimold Emulsion Coating Material

Next, 5 g of the powder of surface-treated composite tungsten oxide fine particles according to Example 4 was mixed with 45 g of an acrylic resin emulsion coating material (aqueous solvent 46% by mass, acrylic resin 54% by mass), and the resulting mixture was ultrasonically dispersed for 30 minutes to obtain an antimold emulsion coating material according to Example 4.

### (3) Production of Antimold Fine Particle Dispersion

Next, the antimold emulsion coating material according to Example 4 obtained was coated on a 3 mm thick glass substrate using a bar coater to form a coating film.

Then, this coating film was allowed to dry naturally for 24 hours to produce an antimold fine particle dispersion according to Example 4, and the antimold properties of the obtained antimold fine particle dispersion according to Example 4 were evaluated.

The results are also shown in Table 1 below.

### [Example 5]

### (1) Production of Surface-Treated Composite Tungsten Oxide Fine Particles

Composite tungsten oxide fine particles were prepared using the high-frequency plasma reactor shown in FIG. 3.

In this example, first, argon gas was passed at 30 L/min from the plasma generation gas supply port 14, and a mixture of argon gas at 40 L/min and hydrogen gas at 3 L/min was supplied spirally from the sheath gas inlet 15 to generate high-frequency plasma. The high-frequency power input at this time was 45 kW.

Next, a slurry obtained by weighing tungstic acid (H₂WO₄) and cesium carbonate (Cs₂CO₃) powders at a ratio corresponding to a Cs/W molar ratio of 0.33, adding them to water, using a mixed gas of 5 L/min argon gas and 0.01 L/min oxygen gas as carrier gas, and supplying them into the plasma at a rate of 2 g/min from the raw material powder supply device 18.

As a result, the particle diameter of the composite tungsten oxide fine particles collected at the bottom of the reaction vessel 12 was 10 nm to 50 nm according to TEM observation.

X-ray diffraction of the composite tungsten oxide fine particles according to Example 5 obtained showed that the product was hexagonal Cs_{0.3}WO₃. Quantitative analysis showed that the composition was Cs_{0.29}WO_{3.13}.

Next, 25% by mass of the composite tungsten oxide fine particles according to Example 5 obtained and 75% by mass of pure water were mixed. The resulting mixture was charged into a paint shaker containing 0.3 mmφ ZrO₂ beads and pulverized/dispersed for 1 hour to obtain a dispersion liquid of the composite tungsten oxide fine particles according to Example 5.

Part of the dispersion liquid of composite tungsten oxide fine particles according to Example 5 obtained was taken out, the solvent was removed from the separated dispersion liquid, and it was confirmed by X-ray diffraction that the product was hexagonal Cs_{0.3}WO₃. Measurement of the crystallite diameter showed that it was 25 nm.

Furthermore, the remaining dispersion liquid of composite tungsten oxide fine particles according to Example 5 obtained was mixed with pure water to obtain a coating film forming dispersion according to Example 5 having a composite tungsten oxide fine particle concentration of 14% by mass.

Then, surface-treated composite tungsten oxide fine particles according to Example 5 were obtained as in Example 1 except for using the coating film forming dispersion according to Example 5.

Observation of the surface-treated composite tungsten oxide fine particles according to Example 5 by a transmission electron microscope showed that the average particle diameter was 25 nm and the thickness of the coating film was 2 nm.

Note that Cs was evaluated by a flame atomic absorption spectrometer (manufactured by VARIAN, Model: SpectrAA 220FS). W was evaluated by ICP emission spectrometer (Shimadzu Corporation, Model: ICPE-9000). O was evaluated by simultaneous oxygen/nitrogen analyzer (LECO Corporation, Model: ON836).

### (2) Production of Antimold Emulsion Coating Material

Next, 5 g of the surface-treated composite tungsten oxide fine particles according to Example 5 was mixed with 45 g of an acrylic resin emulsion coating material (aqueous solvent 46% by mass, acrylic resin 54% by mass), and the resulting mixture was ultrasonically dispersed for 30 minutes to obtain an antimold emulsion coating material according to Example 5.

### (3) Production of Antimold Fine Particle Dispersion

Next, the antimold emulsion coating material according to Example 5 obtained was coated on a 3 mm thick glass substrate using a bar coater to form a coating film.

Then, this coating film was allowed to dry naturally for 24 hours to produce an antimold fine particle dispersion according to Example 5, and the antimold properties of the obtained antimold fine particle dispersion according to Example 5 were evaluated. The results are also shown in Table 1 below.

### [Example 6]

### (1) Production of Surface-Treated Composite Tungsten Oxide Fine Particles

Composite tungsten oxide fine particles were produced by a solid phase reaction method.

That is, after weighing tungstic acid (H₂WO₄) powder and cesium carbonate (Cs₂CO₃) powder at a ratio corresponding to a Cs/W molar ratio of 0.27, they were thoroughly mixed in an agate mortar to prepare a raw material powder which was a mixed powder.

The raw material powder was heated under a supply of 5 vol% H₂ gas using N₂ gas as carrier gas and subjected to 1 hour of reduction treatment at 570°C (first heat treatment step).

That is, heat treatment was performed in an atmosphere of the first gas composed of hydrogen gas which was a reducing gas at 5 vol% and nitrogen gas which was an inert gas for the balance.

Then, heating was performed under a supply of 1 vol% compressed air using N₂ gas as carrier gas, and baking was performed at 820°C for 1.5 hours (second heat treatment step).

That is, heat treatment was performed in an atmosphere of the second gas composed of air which was an oxygen source at 1 vol% and nitrogen gas which was an inert gas for the balance.

After the second heat treatment step, baking was further performed at 820°C for 0.5 hours under a N₂ gas atmosphere.

X-ray diffraction of the composite tungsten oxide fine particles according to Example 6 obtained showed that the product was hexagonal Cs_{0.3}WO₃. Quantitative analysis showed that the composition was Cs_{0.27}WO_{2.70}.

The composite tungsten oxide fine particles according to Example 6 obtained, at 25% by mass, and pure water at 75% by mass were mixed. The resulting mixture was charged into a paint shaker containing 0.3 mmφ ZrO₂ beads and pulverized/dispersed for 10 hours to obtain a dispersion liquid of the composite tungsten oxide fine particles according to Example 6.

Part of the dispersion liquid of composite tungsten oxide fine particles according to Example 6 obtained was taken out, the solvent was removed from the separated dispersion liquid, and it was confirmed by X-ray diffraction that the product was hexagonal Cs_{0.3}WO₃. Measurement of the crystallite diameter showed that it was 30 nm.

Furthermore, the remaining dispersion liquid of composite tungsten oxide fine particles according to Example 6 obtained was mixed with pure water to obtain a coating film forming dispersion according to Example 6 having a composite tungsten oxide fine particle concentration of 14% by mass.

Then, surface-treated composite tungsten oxide fine particles according to Example 6 were obtained as in Example 1 except for using the coating film forming dispersion according to Example 6.

Note that observation of the surface-treated composite tungsten oxide fine particles according to Example 6 by a transmission electron microscope showed that the average particle diameter was 25 nm and the thickness of the coating film was 2 nm.

### (2) Production of Antimold Emulsion Coating Material

Next, 5 g of the composite tungsten oxide fine particles according to Example 6 was mixed with 45 g of an acrylic resin emulsion coating material (aqueous solvent 46% by mass, acrylic resin 54% by mass), and the resulting mixture was ultrasonically dispersed for 30 minutes to obtain an antimold emulsion coating material according to Example 6.

### (3) Production of Antimold Fine Particle Dispersion

Next, the antimold emulsion coating material according to Example 6 obtained was coated on a 3 mm thick glass substrate using a bar coater to form a coating film.

Then, this coating film was allowed to dry naturally for 24 hours to produce an antimold fine particle dispersion according to Example 6, and the antimold properties of the obtained antimold fine particle dispersion according to Example 6 were evaluated.

The results are also shown in Table 1 below.

### [Comparative Example 1]

### (1) Production of Composite Tungsten Oxide Fine Particles

A dispersion liquid of Cs_{0.33}WO₃ fine particles according to Comparative Example 1 was obtained by mixing 25% by mass of cesium composite tungsten oxide (Cs_{0.33}WO₃) powder having a Cs/W molar ratio of 0.33 (YM-01 manufactured by Sumitomo Metal Mining Co., Ltd.) and 75% by mass of pure water, charging the resulting mixture into a paint shaker containing 0.3 mmφ ZrO₂ beads, and pulverizing/dispersing for 10 hours.

Part of the dispersion liquid of Cs_{0.33}WO₃ fine particles according to Comparative Example 1 obtained was taken out, the solvent was removed from the separated dispersion liquid, and it was confirmed by X-ray diffraction that the crystal system of the Cs_{0.33}WO₃ fine particles was hexagonal. Measurement of the crystallite diameter showed that it was 32 nm.

Then, the solvent was evaporated from the remaining Cs_{0.33}WO₃ particle dispersion liquid according to Comparative Example 1 by vacuum flow drying, and the obtained dried product was dry-pulverized with a hammer mill to obtain composite tungsten oxide fine particles according to Comparative Example 1.

Observation of the composite tungsten oxide fine particles according to Comparative Example 1 by a transmission electron microscope showed that the average particle diameter was 25 nm.

### (2) Production of Antimold Emulsion Coating Material

Next, 5 g of the composite tungsten oxide fine particles according to Comparative Example 1 was mixed with 45 g of an acrylic resin emulsion coating material (aqueous solvent 46% by mass, acrylic resin 54% by mass), and the resulting mixture was ultrasonically dispersed for 30 minutes to obtain an antimold emulsion coating material according to Comparative Example 1.

### (3) Production of Antimold Fine Particle Dispersion

Next, the antimold emulsion coating material according to Comparative Example 1 obtained was coated on a 3 mm thick glass substrate using a bar coater to form a coating film.

Then, this coating film was allowed to dry naturally for 24 hours to produce an antimold fine particle dispersion according to Comparative Example 1, and the antimold properties of the obtained antimold fine particle dispersion according to Comparative Example 1 were evaluated.

The results are also shown in Table 1 below.

**[Table 1]**

| | Colony Count | |
|---|---|---|
| | Aspergillus niger | Penicillium pinophilum |
| Example 1 | ⊚ | ⊚ |
| Example 2 | ⊚ | ⊚ |
| Example 3 | ○ | ○ |
| Example 4 | ⊚ | ⊚ |
| Example 5 | ⊚ | ○ |
| Example 6 | ⊚ | ○ |
| Comparative Example 1 | × | × |

### [Confirmation]

As can be seen from the antimold evaluation results shown in Table 1, it was confirmed that the antimold fine particle dispersions according to the examples had more excellent antimold properties than the antimold fine particle dispersion according to Comparative Example 1.

### INDUSTRIAL APPLICABILITY

Since the antimold emulsion coating material to be used according to the present invention exhibits antimold effects over an extended period, it has the possibility of industrial utilization as a coating material for building exterior walls and the like exposed to a wet heat environment.

### REFERENCE SIGNS LIST

1 WO₆ units
2 Element M
11 Water-cooled quartz double tube
12 Reaction vessel
13 Vacuum exhaust device
14 Plasma generation gas supply port
15 Sheath gas inlet
16 Water-cooled copper coil for generating high-frequency plasma
17 Raw material powder carrier gas supply port
18 Raw material powder supply device
19 Gas supply device

## Claims

1. Use of an emulsion coating material comprising:
composite tungsten oxide fine particles whose surfaces are coated with a coating film containing at least one selected from hydrolysis products of metal chelate compounds, polymers of hydrolysis products of metal chelate compounds, hydrolysis products of metal cyclic oligomer compounds, and polymers of hydrolysis products of metal cyclic oligomer compounds; and a resin emulsion containing a binder resin and water, wherein the emulsion coating material contains the surface-treated composite tungsten oxide fine particles dispersed therein, as an antimold emulsion coating material.

2. The use according to claim 1, wherein a thickness of the coating film is 0.5 nm or more.

3. The use according to claim 1 or 2, wherein the metal chelate compound or the metal cyclic oligomer compound contains at least one metal element selected from Al, Zr, Ti, Si, and Zn.

4. The use according to any one of claims 1 to 3, wherein the metal chelate compound or the metal cyclic oligomer compound has at least one selected from an ether bond, an ester bond, an alkoxy group, and an acetyl group.

5. The use according to any one of claims 1 to 4, wherein the composite tungsten oxide fine particles are represented by a general formula MxWyOz, where M is at least one element selected from H, He, alkali metals, alkaline earth metals, rare earth elements, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi, I, and Yb; W is tungsten; O is oxygen; 0.001≤x/y≤1; and 2.0≤z/y<4.0.

6. The use according to claim 5, wherein M of the composite tungsten oxide fine particles represented by the general formula MxWyOz is at least one element selected from Cs, K, Rb, Tl, In, and Ba.

7. The use according to claim 5 or 6, wherein x/y of the composite tungsten oxide fine particles represented by the general formula MxWyOz is 0.25≤x/y≤0.35.

8. The use according to any one of claims 1 to 7, wherein the composite tungsten oxide fine particles have a hexagonal crystal structure.

9. The use according to any one of claims 1 to 8, wherein the composite tungsten oxide fine particles have an average particle diameter of 10 nm to 200 nm.

10. Use of a fine particle dispersion formed by coating the emulsion coating material as defined by claim 1, comprising: composite tungsten oxide fine particles whose surfaces are coated with a coating film containing at least one selected from hydrolysis products of metal chelate compounds, polymers of hydrolysis products of metal chelate compounds, hydrolysis products of metal cyclic oligomer compounds, and polymers of hydrolysis products of metal cyclic oligomer compounds; and a solid resin in which the composite tungsten oxide fine particles are dispersed, as an antimold fine particle dispersion.

11. The use according to claim 10, wherein the composite tungsten oxide fine particles are represented by a general formula MxWyOz, where M is at least one element selected from H, He, alkali metals, alkaline earth metals, rare earth elements, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi, I, and Yb; W is tungsten; O is oxygen; 0.001≤x/y≤1; and 2.0≤z/y<4.0.

12. The use according to claim 11, wherein M of the composite tungsten oxide fine particles represented by the general formula MxWyOz is at least one element selected from Cs, K, Rb, Tl, In, and Ba.

13. The use according to claim 11 or 12, wherein x/y of the composite tungsten oxide fine particles represented by the general formula MxWyOz is 0.25≤x/y≤0.35.

14. The use according to any one of claims 10 to 13, wherein the composite tungsten oxide fine particles have a hexagonal crystal structure.

15. The use according to any one of claims 10 to 14, wherein the composite tungsten oxide fine particles have an average particle diameter of 10 nm to 200 nm.

16. The use according to any one of claims 10 to 15, wherein the fine particle dispersion is used to form an article with an antimold fine particle dispersion being formed on a substrate selected from glass, plastic, and metal.

## Patentansprüche

1. Verwendung eines Emulsionsbeschichtungsmaterials, das umfasst:
Verbundwerkstoff-Wolframoxid-Feinteilchen, deren Oberflächen mit einem Beschichtungsfilm beschichtet sind, der mindestens eines, ausgewählt aus Hydrolyseprodukten von Metallchelatverbindungen, Polymeren von Hydrolyseprodukten von Metallchelatverbindungen, Hydrolyseprodukten von Metall-zyklischen-Oligomerverbindungen und Polymeren von Hydrolyseprodukten von Metall-zyklischen-Oligomerverbindungen, enthält; und eine Harzemulsion, die ein Bindemittelharz und Wasser enthält, wobei das Emulsionsbeschichtungsmaterial die darin dispergierten oberflächenbehandelten Verbundwerkstoff-Wolframoxid-Feinteilchen als ein Anti-Schimmel-Emulsionsbeschichtungsmaterial enthält.

2. Verwendung gemäß Anspruch 1, wobei eine Dicke des Beschichtungsfilms 0,5 nm oder mehr ist.

3. Verwendung gemäß Anspruch 1 oder 2, wobei die Metallchelatverbindung oder die Metall-zyklische-Oligomerverbindung mindestens ein aus Al, Zr, Ti, Si und Zn ausgewähltes Metallelement enthält.

4. Verwendung gemäß einem der Ansprüche 1 bis 3, wobei die Metallchelatverbindung oder die Metall-zyklische-Oligomerverbindung mindestens eines, ausgewählt aus einer Etherbindung, einer Esterbindung, einer Alkoxygruppe und einer Acetylgruppe, aufweist.

5. Verwendung gemäß einem der Ansprüche 1 bis 4, wobei die Verbundwerkstoff-Wolframoxid-Feinteilchen durch eine allgemeine Formel MxWyOz dargestellt sind, in der M mindestens ein Element ist, ausgewählt aus H, He, Alkalimetallen, Erdalkalimetallen, Seltenerdelementen, Mg, Zr, Cr, Mn, Fe, Ru, Co, Rh, Ir, Ni, Pd, Pt, Cu, Ag, Au, Zn, Cd, Al, Ga, In, TI, Si, Ge, Sn, Pb, Sb, B, F, P, S, Se, Br, Te, Ti, Nb, V, Mo, Ta, Re, Be, Hf, Os, Bi, I und Yb; W Wolfram ist; O Sauerstoff ist; 0,001 ≤ x/y ≤ 1; und 2,0 ≤ z/y < 4,0.

6. Verwendung gemäß Anspruch 5, wobei M der durch die allgemeine Formel MxWyOz dargestellten Verbundwerkstoff-Wolframoxid-Feinteilchen mindestens ein aus Cs, K, Rb, TI, In und Ba ausgewähltes Element ist.

7. Verwendung gemäß Anspruch 5 oder 6, wobei x/y der durch die allgemeine Formel MxWyOz dargestellten Verbundwerkstoff-Wolframoxid-Feinteilchen 0,25 ≤ x/y ≤ 0,35 ist.

8. Verwendung gemäß einem der Ansprüche 1 bis 7, wobei die Verbundwerkstoff-Wolframoxid-Feinteilchen eine hexagonale Kristallstruktur aufweisen.

9. Verwendung gemäß einem der Ansprüche 1 bis 8, wobei die Verbundwerkstoff-Wolframoxid-Feinteilchen einen durchschnittlichen Feinteilchendurchmesser von 10 nm bis 200 nm aufweisen.

10. Verwendung einer Feinteilchendispersion, die durch Beschichtung des wie durch Anspruch 1 definierten Emulsionsbeschichtungsmaterials gebildet ist, das umfasst: Verbundwerkstoff-Wolframoxid-Feinteilchen, deren Oberflächen mit einem Beschichtungsfilm beschichtet sind, der mindestens eines, ausgewählt aus Hydrolyseprodukten von Metallchelatverbindungen, Polymeren von Hydrolyseprodukten von Metallchelatverbindungen, Hydrolyseprodukten von Metall-zyklischen-Oligomerverbindungen und Polymeren von Hydrolyseprodukten von Metall-zyklischen-Oligomerverbindungen, enthält; und ein Festharz, in dem die Verbundwerkstoff-Wolframoxid-Feinteilchen als eine Anti-Schimmel-Feinteilchendispersion dispergiert sind.

11. Verwendung gemäß Anspruch 10, wobei die Verbundwerkstoff-Wolframoxid-Feinteilchen durch eine allgemeine Formel MxWyOz dargestellt sind, in der M mindestens ein Element ist, ausgewählt aus H, He, Alkalimetallen, Erdalkalimetallen, Seltenerdelementen, Mg, Zr, Cr, Mn, Fe, Ru, Co, Rh, Ir, Ni, Pd, Pt, Cu, Ag, Au, Zn, Cd, Al, Ga, In, TI, Si, Ge, Sn, Pb, Sb, B, F, P, S, Se, Br, Te, Ti, Nb, V, Mo, Ta, Re, Be, Hf, Os, Bi, I und Yb; W Wolfram ist; O Sauerstoff ist; 0,001 ≤ x/y ≤ 1; und 2,0 ≤ z/y < 4,0.

12. Verwendung gemäß Anspruch 11, wobei M der durch die allgemeine Formel MxWyOz dargestellten Verbundwerkstoff-Wolframoxid-Feinteilchen mindestens ein aus Cs, K, Rb, TI, In und Ba ausgewähltes Element ist.

13. Verwendung gemäß Anspruch 11 oder 12, wobei x/y der durch die allgemeine Formel MxWyOz dargestellten Verbundwerkstoff-Wolframoxid-Feinteilchen 0,25 ≤ x/y ≤ 0,35 ist.

14. Verwendung gemäß einem der Ansprüche 10 bis 13, wobei die Verbundwerkstoff-Wolframoxid-Feinteilchen eine hexagonale Kristallstruktur aufweisen.

15. Verwendung gemäß einem der Ansprüche 10 bis 14, wobei die Verbundwerkstoff-Wolframoxid-Feinteilchen einen durchschnittlichen Teilchendurchmesser von 10 nm bis 200 nm aufweisen.

16. Verwendung gemäß einem der Ansprüche 10 bis 15, wobei die Feinteilchendispersion verwendet wird, um einen Gegenstand mit einer Anti-Schimmel-Feinteilchendispersion zu bilden, die auf einem Substrat gebildet wird, das aus Glas, Plastik und Metall ausgewählt ist.

## Revendications

1. Utilisation d'un matériau de revêtement en émulsion comprenant :
des particules fines composites d'oxyde de tungstène dont les surfaces sont recouvertes d'un film de revêtement contenant au moins un choisi parmi des produits d'hydrolyse de composés de chélate métallique, des polymères de produits d'hydrolyse de composés chélatés métalliques, des produits d'hydrolyse de composés oligomères cycliques métalliques et des polymères de produits d'hydrolyse de composés oligomères cycliques métalliques ; et une émulsion de résine contenant une résine liante et de l'eau, le matériau de revêtement en émulsion contenant les particules fines composites d'oxyde de tungstène traitées en surface qui y sont dispersées, en tant que matériau de revêtement en émulsion anti-moisissure.

2. Utilisation selon la revendication 1, dans laquelle une épaisseur du film de revêtement est de 0,5 nm ou plus.

3. Utilisation selon la revendication 1 ou 2, dans laquelle le composé chélaté métallique ou le composé oligomère cyclique métallique contient au moins un élément métallique choisi parmi Al, Zr, Ti, Si et Zn.

4. Utilisation selon une quelconque des revendications 1 à 3, dans laquelle le composé chélaté métallique ou le composé oligomère cyclique métallique a au moins un choisi parmi une liaison éther, une liaison ester, un groupe alcoxy et un groupe acétyle.

5. Utilisation selon une quelconque des revendications 1 à 4 dans laquelle les particules fines composites d'oxyde de tungstène sont représentées par une formule générale MxWyOz, où M est au moins un élement choisis parmi H, He, des métals alcalins, des métals alcalino-terreux, des éléments de terres rares, Mg, Zr, Cr, Mn, Fe, Ru, Co, Rh, Ir, Ni, Pd, Pt, Cu, Ag, Au, Zn, Cd, Al, Ga, In, TI, Si, Ge, Sn, Pb, Sb, B, F, P, S, Se, Br, Te, Ti, Nb, V, Mo, Ta, Re, Be, Hf, Os, Bi, I, et Yb, et W est tungstène ; O est oxygène ; 0,001 ≤ x/y ≤ 1 ; et 2,0 ≤ z/y < 4,0.

6. Utilisation selon la revendication 5, dans laquelle M des particules fines composites d'oxyde de tungstène représentées par la formule générale MxWyOz, est au moins un élément choisi parmi Cs, K, Rb, Tl, In et Ba.

7. Utilisation selon la revendication 5 ou 6, dans laquelle x/y des particules fines composites d'oxyde de tungstène représentées par la formule générale MxWyOz est 0,25 ≤ x/y ≤ 0,35.

8. Utilisation selon une quelconque des revendications 1 à 7, dans laquelle les particules fines composites d'oxyde de tungstène ont une structure cristalline hexagonale.

9. Utilisation selon une quelconque des revendications 1 à 8, dans laquelle les particules fines composites d'oxyde de tungstène ont un diamètre de particule moyen de 10 nm à 200 nm.

10. Utilisation d'une dispersion de particules fines formée en revêtant le matériau de revêtement en émulsion tel que défini par la revendication 1, comprenant : des particules fines composites d'oxyde de tungstène dont les surfaces sont revêtues d'un film de revêtement contenant au moins un choisi parmi des produits d'hydrolyse de composés de chélate métallique, des polymères de produits d'hydrolyse de composés chélatés métalliques, des produits d'hydrolyse de composés oligomères cycliques métalliques et des polymères de produits d'hydrolyse de composés oligomères cycliques métalliques ; et une résine solide dans laquelle les particules fines composites d'oxyde de tungstène sont dispersées, en tant que dispersion de particules fines anti-moisissure.

11. Utilisation selon la revendication 10 dans laquelle les particules fines composites d'oxyde de tungstène sont représentées par une formule générale MxWyOz, où M est au moins un élement choisis parmi H, He, des métals alcalins, des métals alcalino-terreux, des éléments de terres rares, Mg, Zr, Cr, Mn, Fe, Ru, Co, Rh, Ir, Ni, Pd, Pt, Cu, Ag, Au, Zn, Cd, Al, Ga, In, TI, Si, Ge, Sn, Pb, Sb, B, F, P, S, Se, Br, Te, Ti, Nb, V, Mo, Ta, Re, Be, Hf, Os, Bi, I, et Yb, et W est tungstène ; O est oxygène ; 0,001 ≤ x/y ≤ 1 ; et 2,0 ≤ z/y < 4,0.

12. Utilisation selon la revendication 11, dans laquelle M des particules fines composites d'oxyde de tungstène représentées par la formule générale MxWyOz est au moins un élément choisi parmi Cs, K, Rb, TI, In et Ba.

13. Utilisation selon la revendication 11 ou 12, dans laquelle x/y des particules fines composites d'oxyde de tungstène représentées par la formule générale MxWyOz est 0,25 ≤ x/y ≤ 0,35.

14. Utilisation selon une quelconque des revendications 10 à 13, dans laquelle les particules fines composites d'oxyde de tungstène ont une structure cristalline hexagonale.

15. Utilisation selon une quelconque des revendications 10 à 14, dans laquelle les particules fines composites d'oxyde de tungstène ont un diamètre de particule moyen de 10 nm à 200 nm.

16. Utilisation selon une quelconque des revendications 10 à 15, dans laquelle la dispersion de particules fines est utilisée pour former un article avec une dispersion de particules fines anti-moisissure étant formée sur un substrat choisi parmi le verre, le plastique et le métal.
